# EUROPÄISCHE PATENTSCHRIFT

(11) **EP 2 933 080 B1**
(45) Veröffentlichungstag und Bekanntmachung des Hinweises auf die Patenterteilung: **19.09.2018**
(21) Anmeldenummer: 15162505.0
(22) Anmeldetag: 02.04.2015
(51) Int. Cl.: B29B 7/48, B29B 7/82, B29C 47/42, B29B 7/84, B29C 47/08, B29C 47/66

(54) **MEHRWELLENEXTRUDER MIT EINEM AUSTAUSCHBAREN VERSCHLEISSEINSATZ ("INLINER")**
MULTI-SHAFT EXTRUDER COMPRISING A REPLACEABLE WEAR INSERT ("INLINER")
EXTRUDEUSE A PLUSIEURS ARBRES AVEC UNE PARTIE RAPPORTEE D'USURE REMPLACABLE ("INLINER")

(30) Priorität: 04.04.2014 DE 202014002902 U
(43) Veröffentlichungstag der Anmeldung: 21.10.2015
(73) Patentinhaber: Blach Verwaltungs GmbH & Co. KG, 74348 Lauffen a.N. (DE)
(72) Erfinder: Blach, Markus, 74348 Lauffen am Neckar (DE); Blach, Michael, 74382 Neckarwestheim (DE)
(74) Vertreter: LS-MP von Puttkamer Berngruber Loth Spuhler

(56) Entgegenhaltungen:
- WO-A1-2004/091889
- CH-A- 423 219
- DE-A1- 2 327 684
- DE-A1- 3 010 659
- DE-A1-102007 016 346
- DE-B1- 2 256 671
- DE-B1- 2 423 785
- DE-U- 7 244 106
- US-A- 4 117 583

## Beschreibung

Die Erfindung betrifft einen Mehrwellenextruder mit einem Extrudergehäuse, das ein Trägermaterial aufweist, in dem wenigstens ein Versorgungskanal verläuft, das wenigstens einen Prozessraum umschließt, der mindestens zwei Extruderschnecken aufnimmt. Zwischen dem Extrudergehäuse und dem Prozessraum ist ein Einsatz angeordnet, dessen Wandstärke 10 mm nicht übersteigt.

Aus der DE 37 80 996 T2 ist ein Extruder mit einem Gehäuse bekannt, das eine darin ausgebildete zylindrische Bohrung umfasst und außerhalb der Bohrung Durchgänge für Heiz- oder Kühlmedien aufweist. Der Extruder weist eine Schnecke auf, die sich axial in der Bohrung des Extrudergehäuses erstreckt und die geeignet ist, gedreht zu werden.

Aus der Patentanmeldung WO 2004/091889 A1 ist ein Extruder mit einem Kern bekannt, der mit Kühlkanälen versehen ist, die von einer Kühlflüssigkeit durchströmt werden, um in dem Verfahrensraum von innen her für einen Wärmeaustausch zu sorgen und ihn zu kühlen. In einer Ausgestaltung weist der Extruder einen eigenen Innenkörper auf, der in dem umgebenden eigentlichen Gehäuse eingeschrumpft und/oder in dieses geklebt wird.

Weiterhin ist aus der deutschen Auslegeschrift DE 2 256 671 B1 eine Verschleißschutzauskleidung für Extrudergehäusebohrungen bekannt, wobei zylinderförmige Büchsen in ausreichend große Bohrungen des Extrudergehäuses eingesetzt werden und der zwischen Büchsenaußenwand und Gehäusebohrung verbleibende Zwischenraum mit einem gießfähigen Material ausgegossen wird.

In der deutschen Offenlegungsschrift DE 30 10 659 A1 wird ein Doppelschneckenextruder mit Verschleißeinsatz beschrieben, wobei letzterer eine spezifische Ausgestaltung mittels nach innen ragender, konkaver Eindellungen aufweist, während alle anderen Umgangsflächen konvex gebogen sind.

Ergänzend wird noch auf die DE 2423785 B1 verwiesen, die einen Verschleisseinsatz für das Schneckengehäuse einer Doppelschneckenspritzgiessmaschine zeigt. Der Verschleisseinsatz insbesondere im dort gezeigten Ausführungsbeispiel der Figur 7 weist einen Aussenquerschnitt auf, der durch zwei Halbkreise gebildet wird, die durch zwei Geraden tangential miteinander verbunden sind, und der im Bereich der Halbkreise sehr dünnwandig und nur im Bereich der Sättel verstärkt ausgebildet sein kann, wobei nähere Angaben beispielsweise hinsichtlich der verwendeten Wandstärken fehlen. Zudem weist in dem genannten Ausführungsbeispiel das Schneckengehäuse keinerlei Bohrungen bzw. Versorgungskanäle beispielsweise für eine Kühlmittelzufuhr auf.

Extruderzylinder unterliegen je nach Verarbeitungsprozess einem erheblichen Verschleiß. Um dem zu begegnen, wurden im Lauf der Zeit unterschiedliche Verschleißschutzsysteme entwickelt.

Diese verfahrenstechnischen Prozesse erfordern in den meisten Fällen eine zusätzliche Kühlung der die Extruderschnecken aufnehmenden Extruderzylinder. Zur Erzielung einer intensiven Wärmeübertragung erfolgt die Kühlung zumeist durch eine stoßartige Wassereinspritzung in einen separaten Kühlkreislauf oder durch ein kontinuierlich durchströmendes Kühlmedium.

Hieraus entstehen zusätzliche Anforderungen an das Zylindermaterial. Die Bereiche des Extrudergehäuses, die besonders thermisch belastet sind, werden aus duktilem Material gefertigt, da ein zu harter und spröder Werkstoff durch thermische Spannungen reißen könnte.

Im Stand der Technik werden Gehäuse mit und ohne Kühlung verwendet.

Bei Gehäusen ohne Kühlung werden auch durchharte Werkstoffe, insbesondere Metalle eingesetzt. Derartige Gehäuse kommen häufig bei Kombigehäusen zum Einsatz, also bei Gehäusen, die seitliche Öffnungen aufweisen, über die z.B. Sidefeeder angeschlossen werden können.

Ferner können an der Oberseite der Kombigehäuse Einrichtungen zur Entlüftung des Extrudergehäuses angeordnet werden.

Im Stand der Technik sind insbesondere drei mögliche Varianten von Extrudergehäusen mit separater Kühlung bekannt:

### Extrudergehäuse mit eingebautem Inliner

Hierbei ist das Extrudergehäuse aus einem weichen Werkstoff gefertigt. Das Extrudergehäuse kann aus unterschiedlichen Bereichen und/oder Modulen zusammengesetzt sein, die z. B. miteinander verschraubt sind.

In das Extrudergehäuse wird ein Einsatz, ein sogenannter Inliner, eingesetzt, der als produktberührendes Bauteil ausgebildet ist. Als Fachbegriff wird deswegen auch die Umschreibung "Verschleißbuchse" oder dergleichen verwendet.

Der Inliner ist durch die wenigstens eine, im Inneren des Inliners um die eigene Längsachse rotierende Extruderschnecke starken Verschleißbelastungen ausgesetzt.

Um diesen Belastungen wirksam begegnen zu können, ist der Einsatz aus einem härtbaren, verschleißbeständigen Werkstoff oder aus einem naturharten Material gefertigt. Aus diesem Grund weist der im Stand der Technik verwendete Einsatz auch eine große Wandstärke im Verhältnis zu dem Schneckendurchmesser auf. Dieses Verhältnis übersteigt im Stand der Technik regelmäßig die Größenordnung von 10% deutlich.

Eine derartige Konstruktion ermöglicht, dass der beschädigte oder verschleißbehaftete Inliner separat ausgetauscht werden kann, was zu einer erheblichen Kostenersparnis führt.

Ferner kann der Inliner aus verschiedensten Werkstoffen gefertigt sein, wodurch der Verschleißschutz an den besonders betroffenen Stellen des Verfahrensteils gezielt und flexibel angepasst werden kann.

Die Funktionen "Verschleißschutz" und "Kühlung" können durch Einsatz eines Inliners getrennt werden. Wird ein aufgrund des Verschleißes beschädigter Inliner ausgetauscht, kann das umgebende Trägergehäuse weiter verwendet werden.

Derartige mit Inlinern ausgerüstete Extrudergehäuse haben jedoch den Nachteil, dass die erforderlichen Kühlbohrungen aufgrund der insbesondere im Bereich des Prozessraumes verwendeten Werkstoffe vergleichsweise weit vom Prozessraum entfernt angeordnet sind, was sich nachteilig auf die Kühlleistung auswirkt.

### Extrudergehäuse mit direkt verbundener Schutzschicht

Hierbei kann z. B. eine Nitrierschicht in die Lauffläche der Extruderschnecke eingebracht werden.

Nitrierte Extrudergehäuse zeichnen sich durch gute Trockenlaufeigenschaften aus. Zudem können Kühlbohrungen im engeren Bereich um den Prozessraum herum angeordnet werden. Die Nitrierschicht weist zwar eine große Härte auf, ist jedoch relativ dünn, so dass sie lediglich eine begrenzte Verschleißreserve bietet.

Gehäuse mit direkt verbundener Schutzschicht weisen ferner den Nachteil auf, dass bei Beschädigung oder Verschleiß das gesamte Extrudergehäuse ausgetauscht werden muss, was sich negativ auf die Reparaturkosten auswirkt.

Es besteht darüber hinaus nur eine begrenzte Werkstoffauswahl, da die Kühlbohrungen insbesondere in einem Bereich des Extrudergehäuses angeordnet sein müssen, der aus vergleichsweise weichem Werkstoff gefertigt ist. Zudem muss der weiche Werkstoff zur Fertigung des Gehäuses schweißbar sein.

Ein weiterer Nachteil besteht darin, dass ein Nitrierstahl mit Oberflächennitrierung oder alternativ die Aufbringung einer Beschichtung lediglich einen vergleichsweise niedrigen Verschleißschutz bietet, da nur eine geringe Anzahl geeigneter Werkstoffe zur Verfügung steht und die Schichten im Allgemeinen relativ dünn sind.

### Extrudergehäuse mit direkt eingehipter Verschleißschutzschicht

Durch heißisostatisches Pressen können hochverschleißbeständige Hartstoffschichten auf die Lauffläche des Prozessraumes aufgebracht werden.

Eine derartige Verschleißschutzschicht ermöglicht eine besonders prozessraumnahe Positionierung der Kühlbohrungen und darüber hinaus eine variable Verschleißschutzmöglichkeit, die insbesondere durch den Einsatz von Sonderwerkstoffen wie Nickelbasislegierungen, Kobaltbasisegierungen oder NiCrBSi eventuell noch mit eingelagertem Wolframcarbid möglich wird.

Nachteilig ist, dass bei Verschleiß das gesamte Extrudergehäuse ausgetauscht werden muss, was einen sehr hohen Kostenaufwand nach sich zieht. Zudem ist der HIP-Herstellungsprozess (heißisostatisches Pressen) sehr aufwendig und dadurch teuer. Die aufwendige Herstellung bewirkt zudem lange Lieferzeiten und ein hohes Fertigungsrisiko.

### Bereich der Erfindung

Die Erfindung stellt sich daher die Aufgabe, einen Mehrwellenextruder bereit zu stellen, bei dem der Einsatz losgelöst vom übrigen Extrudergehäuse ausgetauscht werden kann, bei dem jedoch der Prozessraum in zufriedenstellender Weise gekühlt werden kann.

Eine weitere Aufgabe besteht darin, ein Extrudergehäuse zu schaffen, dessen Werkstoffzusammensetzung auf die Funktionen "Verschleißschutz" und "Kühlung" abgestimmt ist, so dass das Extrudergehäuse beiden Funktionen gerecht wird.

Ferner soll vorzugsweise ein Einsatz geschaffen werden, der durch seine Ausgestaltung, insbesondere in der Ausgestaltung seiner Außenkontur und/oder ihre Anpassung an die Innenkontur des radial außen folgenden Bereichs des Extrudergehäuses eine deutliche Reduzierung seiner Wandstärke im Verhältnis zu dem Schneckenaussendurchmesser im Vergleich zu derartigen Einsätzen im Stand der Technik erlaubt, ohne dass hierdurch seine Funktionen der Lagerung, Führung, Kraft und/oder Drehmomentübertragung sowie der Durchführung der Prozesstätigkeit der Extruderschnecke beeinträchtigt werden.

Darüber hinaus besteht eine weitere Aufgabe darin, einen Mehrwellenextruder bereit zu stellen, dessen Herstellungsprozess in Bezug auf den Kostenaufwand, die Lieferzeit und das Fertigungsrisiko vertretbar bleibt.

Die Aufgabe wird gelöst durch einen Mehrwellenextruder mit einem Extrudergehäuse nach Anspruch 1, das ein Trägermaterial aufweist, in dem wenigstens ein Versorgungskanal verläuft, das wenigstens einen Prozessraum umschließt, der mindestens zwei Extruderschnecken aufnimmt. Zwischen dem Extrudergehäuse und dem Prozessraum ist ein Einsatz angeordnet, dessen Wandstärke die in Anspruch 1 genannte prozentuale Größe nicht übersteigt. Ein Einsatz zur Anordnung in einem Extrudergehäuse eines Mehrwellenextruders wird mit den Merkmalen des Anspruches 14 beansprucht.

### Ausgestaltung und Funktion des Einsatzes

Der Einsatz, insbesondere ein Inliner, ist eine Art Hülse, eine Art Buchse, ein Art Rohr oder ein zylinderförmiger Körper, die/das/ der eine Fixier-, Verschleissschutz- und/oder Isolierfunktion erfüllt und im Extrudergehäuse die wenigstens zwei Extruderschnecken aufnimmt und umgibt.

Ein besonderer Vorteil des Einsatzes ergibt sich dabei bei seiner Verwendung mit einem sogenannten RingExtruder. Die Verfahrenseinheit des RingExtruders besteht aus 12 gleichsinnig drehenden, dichtkämmenden Schnecken, welche ringförmig angeordnet sind. Diese Schnecken sind umfasst von dem inneren Kern und dem äußeren Gehäuse. Der Schmelzestrom wird hierbei in 12 einzelne Stoffströme unterteilt, welche für hohe Mischleistungen sorgen. Aufgrund des günstigen Volumen-Oberflächen-Verhältnisses ergeben sich prozesstechnische Vorteile wie beispielsweise exakte Temperaturführung oder intensive Oberflächenerneuerung und somit Entgasungsleistung.

In Abhängigkeit des Verwendungsbereichs und der Beanspruchung des Einsatzes können zur Herstellung des Inliners unterschiedlichste Werkstoffe eingesetzt werden. Beispielhaft und in keiner Weise ausschließlich kommen insbesondere hochlegierte Werkzeugstähle, Chromstähle aber auch pulvermetallurgisch hergestellte Werkstoffe auf Nickel- oder Kobaltbasis oder NiCrBSimit eingelagerten Hartstoffen zum Einsatz.

Der Einsatz kann in das Extrudergehäuse eingeschoben, eingepasst oder eingeschrumpft werden.

Zur Herstellung des Einsatzes können auch Formgedächtnislegierungen (shape memory alloy) verwendet werden. Hierunter sind spezielle Metalle zu verstehen, die in zwei unterschiedlichen Kristallstrukturen existieren können. Der Formgedächtniseffekt ist durch eine Formänderung beim Aufheizen des Metalls gekennzeichnet. Im Zuge eines darauf folgenden Abkühlungsprozess nimmt die Formgedächtnislegierung ihre ursprüngliche Form wieder ein.

Der Einsatz kann mit seiner Außenkontur ganz oder zumindest bereichsweise flächig oder in Form einer Gitterstruktur an der Innenkontur des Extrudergehäuses anliegen.

Die Form des Einsatzes kann zylinderförmig, oval oder elliptisch sein. Darüber hinaus kann der Einsatz in jeder anderen geometrischen Form ausgebildet sein.

Insbesondere die flächig ausgebildete Wand des Einsatzes kann zur Vergrößerung ihrer Oberfläche in sich gewellt sein, um eine verbesserte Wärmeabfuhr ermöglichen zu können. Zusätzlich kann die Wand zur Vergrößerung ihrer Oberfläche Rippen oder Lamellen aufweisen.

Im Falle der Gitterstruktur des Einsatzes können achsparallel zum Extruder verlaufende Gitterstäbe und/oder radial angeordnete Gitterstäbe verwendet werden.

Korrespondierend zur flächigen oder strukturierten Außenkontur des Einsatzes kann an der Innenkontur des Extrudergehäuses eine vorzugsweise weiche metallische Beschichtung angeordnet sein. Beim Einführen des Einsatzes in das Extrudergehäuse greift die Außenstruktur des Einsatzes in die weiche Beschichtung an der Innenkontur des Extrudergehäuses ein. Selbstverständlich kann die Anordnung der Struktur bzw. die Anordnung der vorzugsweise weichen metallischen Beschichtung im Hinblick auf den Einsatz bzw. das Extrudergehäuse auch umgekehrt angeordnet sein. Diese Beschichtung kann insbesondere als eine Lage aus Kupfer ausgestaltet sein, was in Bezug auf die Kühlleitfähigkeit bevorzugtes Material ist.

Anstelle einer vorzugsweise weichen Beschichtung kann auch eine Vergußmasse zwischen Extrudergehäuse und Einsatz eingebracht werden, die eine Wärmeleitung zwischen beiden Baugruppen optimiert.

Das Extrudergehäuse ist aus unterschiedlichen Bereichen aufgebaut, die in Abhängigkeit z.B. von der jeweiligen Funktion des Bereichs aus voneinander abweichenden Metallen oder Metalllegierungen gefertigt sind. Bereiche, die Versorgungsleitungen, bevorzugt Kühlleitungen aufnehmen, sind insbesondere aus weicheren Metallen/Metalllegierungen gefertigt. Der zum Prozessraum benachbarte Bereich ist dagegen insbesondere aus Gründen der Festigkeit bevorzugt aus härteren, spröden Metallen/Metalllegierungen gefertigt.

Die Bereiche können in Bezug zum Prozessraum radial zueinander angeordnet sein. Die Bereiche können alternativ oder ergänzend auch am Aussenumfang des Prozessraums benachbart zu einander angeordnet sein.

Die Erfindung ermöglicht, zur Optimierung der Abkühlung und/oder zur Temperierung des Prozessraums den wenigstens einen Versorgungskanal, z.B. Kühlkanal, radial gesehen möglichst nahe am Prozessraum anzuordnen.

Dies wird dadurch erreicht, dass ein Einsatz, der wenigstens einen Prozessraum umschließt, in dem sich mindestens zwei Extruderschnecken erstrecken, eine Wandstärke aufweist, die zumindest in Teilbereichen 7% vom Schneckenaussendurchmesser nicht übersteigt. Soweit von einer Wandstärke gesprochen wird, gilt dies auch etwa für die Gitterstäbe eines gitterartigen Einsatzes.

Der Extruder umfasst die Extruderschnecken, die sich jeweils in einem Extruderzylinder eines Extrudergehäuses erstrecken. Der Schneckenaussendurchmesser entspricht dabei dem Aussendurchmesser einer Extruderschnecke.

Der Prozessraum befindet sich dabei zwischen dem Einsatz und der Extruderschnecke.

Im Fall des Ringextruders ist ein äußerer Prozessraum zwischen dem Einsatz und den Extruderschnecken angeordnet und weist z.B. acht oder zwölf Schneckenkanäle auf.

Ein innerer Prozessraum ist zwischen den Schnecken und einem weiteren, den ortsfesten Extruder-Kern umgebenden Einsatz angeordnet.

Im Prozessraum wird das zu bearbeitende Produkt beispielhaft und in keiner Weise ausschließlich, z.B. ein Kunststoff oder ein Gummi- oder Kautschukprodukt, mit Hilfe der Extruderschnecke gefördert, vermengt und/oder aufgeschmolzen bzw. mastifiziert und/oder zerkleinert und/oder homogenisiert.

Der Prozessraum ist von einem Einsatz, insbesondere einem sogenannten Inliner umschlossen. Der Einsatz dient der Aufnahme der Extruderschnecke. Er kann zylinderförmig, rosettenförmig oder ellipsenförmig ausgestaltet sein oder eine sonstige geometrische Formen aufweisen. Der Einsatz kann insbesondere die Funktionen der Lagerung, Führung, Kraft und/oder Drehmomentübertragung und der Durchführung der Prozesstätigkeit der Extruderschnecke erfüllen.

Der Inliner hat die Form eines Gleitlagers, in dem die Extruderschnecken relativ zueinander und relativ zum Gleitlager um die eigene Achse rotieren.

Der Einsatz ist in das Extrudergehäuse einführbar und aus diesem herausnehmbar.

Die Wandstärke des Einsatzes, insbesondere des Inliners ist mit seiner Außenkontur im Wesentlichen an die Innenkontur des radial außen folgenden Bereichs des Extrudergehäuses angepasst. Die Anpassung der Außenkontur des Einsatzes, insbesondere des Inliners an die Innenkontur des radial außen folgenden Bereichs des Extrudergehäuses, erfolgt insbesondere durch Drahterodieren, derart, dass das Extrudergehäuse den Einsatz stützt.

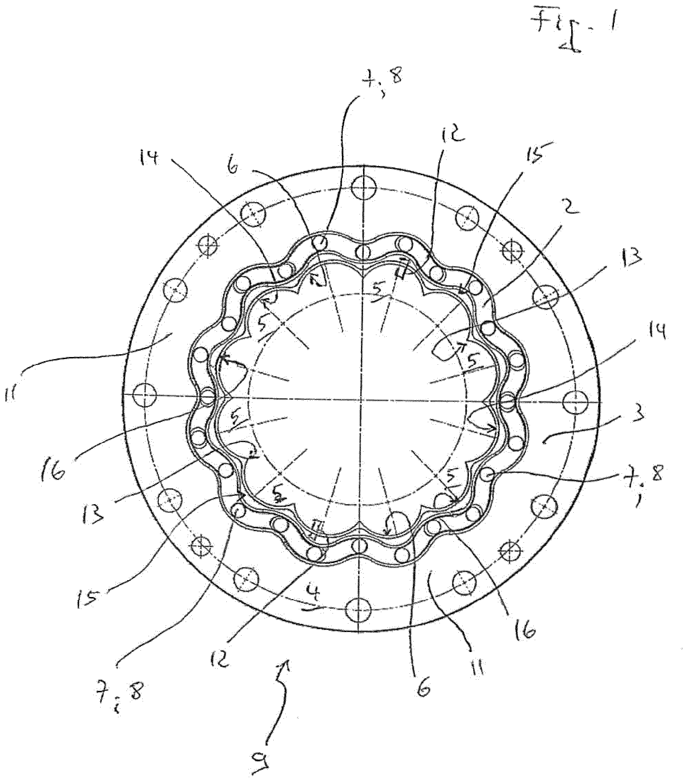

Soweit im Rahmen dieser Erfindung von einem Bereich des Extrudergehäuses gesprochen wird, ist damit das an den Einsatz angrenzende Trägermaterial des Extrudergehäuses gemeint. Dieses Material kann - wie zu Fig. 1 beschrieben - schichtartig aufgebaut sein. Es kann aber auch einstückig, insbesondere einstückig im Hinblick auf den Werkstoff, mit jeglicher geometrischen Konfiguration aufgebaut sein.

Beispielhaft und in keiner Weise ausschließlich erfolgt ausgehend von der Rotation der Extruderschnecken eine Übertragung z.B. von Torsionskräften über den Einsatz auf das Extrudergehäuse. Ein Brechen des Einsatzes, insbesondere des Inliners kann durch die erfinderische Ausgestaltung verhindert werden, selbst wenn ein harter und spröder Werkstoff für die Herstellung des Einsatzes verwendet wird. Durch die geometrische Ausgestaltung wird das Drehmoment, welches am Umfang kontinuierlich durch die Schnecken in den Einsatz eingeleitet wird, ebenso am Umfang kontinuierlich auf das Trägergehäuse übertragen. Hierdurch ist die Spannung im Einsatz geringer als dies bei bisher üblichen Lösungen mit z.B. Passfedern zur Drehmomentübertragung der Fall wäre.

Die Außenkontur des Einsatzes ist in der Weise an die Innenkontur des Extrudergehäuses so angepasst, dass seine Wandstärke im Vergleich zum Schneckenaussendurchmesser 7%, vorzugsweise 6%, weiter vorzugsweise 5%, und ganz besonders vorzugsweise 4,5% zumindest in Teilbereichen nicht übersteigt.

Die Anmelderin hat diese vorstehend wiedergegebenen Wandstärken bereits erfolgreich getestet. Diese Wandstärken lassen sich durch mehrere herkömmliche Walzvorgänge des Ausgangsmaterials erreichen.

Sie ist vorzugsweise so angepasst, dass sie gegenüber der Innenkontur des Extrudergehäuses verdrehsicher wirkt.

Die Außenkontur des Einsatzes ist beispielhaft in der Weise an die Innenkontur des Extrudergehäuses angepasst, dass die Wandstärke auch im Zwickelbereich 7%, bevorzugt 6% und besonders bevorzugt 5% und im besonderen Maße 4,5% vom Schneckenaussendurchmesser nicht übersteigt.

Die Erfindung erweist sich als äußerst vorteilhaft, da die Wandstärke des Inliners beispielhaft den Wert von 5 mm, bevorzugt 4,2 mm und besonders bevorzugt 3,5 mm oder bis 3 mm bei einem Schneckenaussendurchmesser von 71 mm unabhängig vom geometrischen Verlauf die Innenkontur des Extrudergehäuses einhält und dabei vorzugsweise in etwa dem Verlauf der Wandung des Extrudergehäuses folgt.

Diese Wandstärke erstreckt sich vorzugsweise über die gesamte Länge und den gesamten Umfang des Einsatzes, kann sich aber auch auf Teilbereiche hiervon erstrecken.

Vorzugsweise ist der Einsatz an den anschließenden Bereich des Extrudergehäuses so angepasst, dass er diesem zumindest über weite Bereiche folgt und vorzugsweise an diesem zumindest über weite Bereiche anliegt.

Hierdurch ist ausgehend von den rotierenden Extruderschnecken eine gute Übertragung von Torsionskräften auf das Extrudergehäuse mit seinem Trägermaterial möglich, obwohl der Einsatz nur eine derart geringe Wandstärke aufweist. Ausgehend von den Kühlkanälen und/den Kühlbohrungen erfolgt eine gute Übertragung der Kühlleistung auf den Prozessraum.

Durch Verwendung eines Einsatzes, insbesondere eines Inliners in einer Wandstärke, bei der dem fertigenden Ingenieur normalerweise durch die Festigkeit des Bauteils Grenzen gesetzt wären, unterstützt das Extrudergehäuse mit seiner dem Prozessraum zugewandten Innenwand den erfindungsgemäßen Einsatz derart, dass der Einsatz gestützt wird und die erforderliche Kraftübertragung auf die radial außen folgende Kontur des Extrudergehäuses, also dessen Innenkontur gewährleistet bleibt.

Weiter vorzugsweise kann die Außenseite des Inliners beziehungsweise die Innenseite des umgebenden Extrudergehäuses mit einem Bereich oder einer Beschichtung eines gut wärmeleitenden Materials versehen werden. Das gut wärmeleitende Material ist vorzugsweise relativ weich, wie z. B. Kupfer.

Durch diese Ausgestaltung der Wandstärke des Einsatzes wird nicht nur eine Verbesserung der Kühlwirkung möglich und vorzugsweise eine präzise Einsetzung in das Extrudergehäuse, sondern auch eine optimale Übertragung des Drehmoments auf das Außengehäuse ermöglicht.

Bei verschleißbedingter Beschädigung des Einsatzes, insbesondere des Inliners kann dieser separat ausgebaut und ausgetauscht werden, ohne, dass die Struktur des umgebenden Extrudergehäuses verändert werden müsste. Dies führt zu einer weiteren Kostenersparnis.

Der Einsatz, insbesondere der Inliner kann aus verschiedensten Werkstoffen gefertigt sein, wodurch je nach Erfordernis ein flexibler Verschleißschutz möglich ist.

Durch Reduzierung der Wandstärke des Einsatzes ist es möglich, Versorgungskanäle, insbesondere zum Transport von Kühlungs- und/oder Temperierungsmedien radial derart an den Prozessraum heranzuführen, dass eine Optimierung der Kühlung und/oder Temperierung des Prozessraumes möglich wird.

In diesem Zusammenhang versteht sich von selbst, dass die Versorgungskanäle neben einem Kühl- und/oder Temperierungsmittel auch Betriebsstoffe, Schmierstoffe, Ergänzungsstoffe oder z.B. Druckluft bedarfsgerecht zuführen können.

Die Erfindung ermöglicht eine optimale Positionierung der Versorgungskanäle, insbesondere der Kühlkanäle oder Kühlbohrungen unter Wahrung eines optimierten Verschleißschutzes. Der Einsatz von Sonderwerkstoffen wie Nickelbasislegierungen, Kobaltbasislegierungen oder NiCrBSi eventuell noch mit eingelagertem Wolframcarbid bleibt möglich.

### Verschleißschutz

Insbesondere bei Ringextrudern sind Gehäuse vorgesehen, die die ringförmig angeordneten Extruderwellen aufnehmen. Im Inneren der kreisförmig angeordneten Extruderwellen kann ein Gehäuse vorgesehen sein, das einen Extruderkern aufnimmt.

Die einzelnen Bauteile des Mehrwellenextruders, insbesondere die Extruderschnecken, die Antriebs- bzw. Antriebswellen und die Extrudergehäuse sowie weitere Bauelemente des Mehrwellenextruders können aus unterschiedlichen Werkstoffen gefertigt sein.

Rein beispielhaft und in keiner Weise ausschließlich kann als Werkstoff Nitrierstahl, gehärteter rostfreier Stahl oder Werkzeugstahl eingesetzt werden. Weiterhin denkbar ist der Einsatz von rostfreiem Edelstahl, von PM-Werkzeugstahl PM Sonderstahl oder von PM-HIP-Verbundstahl.

Je nach Einsatzzweck, Belastung und Anforderung kann ein rostfreier Basisstahl mit Stegpanzerung, ein Warmarbeitsstahl, ein Vergütungsstahl oder ein hochfester Sonderstahl eingesetzt werden.

Mehrwellenextruder können Gehäuse, insbesondere Extrudergehäuse für Förderelemente, Rückförderelemente, Knetelemente sowie Mischelemente aufweisen. Weitere Extrudergehäuse dienen der Aufnahme von Übergangselementen, Schubkantenelementen sowie Seitenzuführschnecken. Zusätzlich können Extrudergehäuse Materialzuführeinrichtungen, Gebläseeinrichtungen und/oder Transporteinrichtungen aufweisen. Das Extrudergehäuse sowie der Einsatz sind besonders hochwertige Bauteile im Verfahrensbereich des Mehrwellenextruders. Sie übernehmen verschiedene Verfahrensaufgaben und unterliegen dabei hohen Beanspruchungen.

Insbesondere Extrudergehäuse und Einsätze unterliegen Korrosions- und/oder Abrasionsbeanspruchungen.

Der Extruderzylinder kann zwei oder mehrere Gehäuseabschnitte umfassen. Es kann insbesondere modulartig aufgebaut sein.

Im Folgenden wird beispielhaft und in keiner Weise ausschließlich von einem einzelnen Extrudergehäuse ausgegangen.

Das Extrudergehäuse kann ein Einfüllgehäuse, ein geschlossenes Gehäuse, ein Seitenzuführgehäuse oder ein Entgasungsgehäuse sein.

Gleichfalls denkbar ist, dass das Extrudergehäuse ein Kombigehäuse ist.

Die Gehäuseabschnitte sind vorzugsweise durch Flanschverbindungen dichtend miteinander verbunden. Die Verbindung kann auch durch Verschraubung, Verschweißung oder durch Klemmverbindungen erfolgen.

Im Weiteren wird davon ausgegangen, dass rein beispielhaft und in keiner Weise ausschließlich eine Schraubverbindung vorliegt.

Derartige verschraubte Flanschverbindungen tragen zur Senkung von Wartungs- und Reparaturkosten bei.

Im Fall der Beschädigung eines Bauteils des Extruders kann der betroffene Gehäuseabschnitt abgelöst werden, um Zugang zu dem beschädigten Teil zu erhalten.

Auf diese Weise ist es nicht erforderlich, den gesamten Teilabschnitt des Extruders auszubauen, um an das jeweils beschädigte Bauteil zu gelangen.

Eine derartige Bauweise erweist sich als äußerst vorteilhaft, da die einzelnen Bereiche der Verfahrenseinheit des Extruders, insbesondere die Extrudergehäuse modulartig aufgebaut sein können, was sich positiv auf die Herstellungskosten auswirkt.

Die Module können in Längs- und/oder Querrichtung zum Extruder verlaufen.

Der modulare Aufbau insbesondere des Extrudergehäuses ermöglicht eine exakte Anpassung der Schnecken- und Gehäusekonfiguration an die jeweilige Verfahrensaufgabe. Außerdem ist der Austausch eines Schneckenelements oder Gehäusesegments wesentlich kostengünstiger und schneller zu erledigen. Wartungsausfälle und Standzeiten des Extruders lassen sich auf diese Weise deutlich reduzieren.

### Temperierung

Mehrwellenextruder dienen bevorzugt der Verarbeitung von Materialien und Produkten wie z.B. Reifen, Gummi, Kautschukprodukten oder kautschukähnlichen Produkten.

Aufgrund ihrer Produkteigenschaften können bestimmte Lebensmittelvorprodukte, Lebensmittel, Tiernahrung und pharmazeutische Wirkstoffe sowie hochviskose Stoffe zu ihrer Be- und Verarbeitung ebenfalls Mehrwellenextrudern zugeführt werden.

Stoffe wie z.B. modifizierte Stärke, Kaugummi, Aromastoffe und Aromakonzentrate, Schokolade, sowie Schokoladenprodukte und denaturiertes Eiweiß unterliegen bei ihrer Herstellung und/oder ihrer Verarbeitung strengen Temperaturvorgaben.

Mehrwellenextruder werden auch bei der Herstellung von Gummiprodukten, wie z.B. Fußbodenbelegen, Gummiplatten und Gummibahnen, technischen Gummiprofilen, Faltenbälgen, Dichtungen, Schläuchen und Gummidämpfer eingesetzt.

Im Elastromer- bzw. Gummibereich werden beim Pre-Mixing sowie beim Compounding temperaturempfindliche Füll- und Verstärkungsstoffe zugesetzt. Derartige Stoffe, Grundmaterialien, Füllstoffe, Weichmacher und Vernetzerchemikalien weisen häufig bei der Be- und Verarbeitung bestimmte Temperaturgrenzwerte auf.

Denkbar ist auch, dass eine Be- und Verarbeitung der vorstehend genannten Stoffe nur unter bestimmten Temperaturvorgaben erfolgen kann. Es versteht sich von selbst, dass neben der Abkühlung bestimmter Bereiche des Extruders andere Bereiche des Extrudergehäuses gezielt erwärmt oder gekühlt werden müssen.

Im Weiteren wird beispielhaft und in keiner Weise ausschließlich von einer Abkühlung von Extrudergehäusebereichen ausgegangen.

Zur Bewahrung empfindlicher Produkte vor thermischer Schädigung bestehen bei vielen Prozessen Obergrenzen für die resultierenden Massetemperaturen. In anderen Fällen muss eine äußere Beheizung ein bestimmtes Temperaturniveau erreichen und dauerhaft einhalten, damit der Aufbereitungsprozess optimal durchgeführt werden kann.

Zum Beispiel muss beim Aufschmelzen von Thermoplasten die Oberflächentemperatur eines Prozessraumes oberhalb der Schmelztemperatur liegen, um genügend Friktion zwischen den Feststoffen und den metallischen Oberflächen zu gewährleisten bzw. einen Schmelzfilm ausbilden zu können.

Bei der Erzeugung von Kautschukmischungen oder kautschukähnlichen Produkten wie z.B. Gummiprodukten, müssen erhebliche Mengen von mechanischer Antriebsenergie eingebracht werden, was zu einer Erhöhung der Temperatur der zu verarbeitenden Mischung führt.

Da bei Kautschukmischungen und/oder kautschukähnlichen Produkten Vernetzungschemikalien zugegeben werden müssen, muss sichergestellt werden, dass die Temperatur der Mischung unterhalb bestimmter, dem Fachmann geläufigen Grenzwerten liegt, da ansonsten die Vernetzungsreaktion zumindest partiell vorzeitig starten könnte.

Im Berührungsbereich zweier Prozessräume eines RingExtruders erstreckt sich der sogenannte Zwickelbereich, der durch hohe Dehnströmungsanteile gekennzeichnet ist. Gerade in diesen verfahrenstechnisch sehr wichtigen Bereichen ist eine exakte Temperaturkontrolle und Wärmeabfuhr besonders wichtig. Die Kühlkanäle oder Kühlbohrungen erstrecken sich radial außerhalb des den Prozessraum umschließenden Einsatzes in einem Bereich des Extrudergehäuses, der/die in Bezug auf die Materialeigenschaften aus einem vergleichsweise weicheren Werkstoff, insbesondere einem weicheren Stahl gefertigt ist.

Die Einbringung eines Kühlkanals oder einer Kühlbohrung insbesondere in einen vergleichsweise weicheren und formbaren metallischen Werkstoff ist fertigungstechnisch weniger aufwendig. Beschädigungen des Werkstoffs bei der Anlage von Kühlkanälen oder Kühlbohrungen, wie z.B. die Bildung von Haarrissen aufgrund von thermischen Spannungen, lassen sich wirksam verhindern.

Bei einem Ringextruder kann das Extrudergehäuse zwei oder mehr voneinander unabhängige Kühlkanäle oder Kühlbohrungen aufweisen. Die Kühlkanäle oder Kühlbohrungen sind dabei insbesondere in dem Bereich des Gehäuses angeordnet, der dem Inliner radial außen benachbart ist.

Der Durchfluss an Kühlmedium kann über die Größe des Querschnitts des Kühlkanals oder der Kühlbohrung optimiert werden. Es besteht vorzugsweise aus einem Fluid.

Das Fluid kann ein Wärmeträgeröl, Wasser, ein Gemisch aus Wasser und Alkohol oder ein Kältemittel sein. Die Kühlflüssigkeit kann Umgebungstemperatur aufweisen oder kälter sein.

Es versteht sich von selbst, dass zur Temperierung insbesondere des Extrudergehäuses auch wenigstens eine Leitung einer Standard-Elektroheizung zum Einsatz kommen kann.

Die Zu- und Ablaufleitungen zur Versorgung des wenigstens einen Versorgungskanals insbesondere mit Kühlmittel oder mit einem Wärmeübertragungsmittel können zwischen dem Getriebe und der Hauptzufuhröffnung angeordnet sein oder im Bereich der Extrudergehäuse liegen.

Zur Optimierung insbesondere der Strömung des Kühlmediums kann die Zufuhr des Wärmeübertragungsmediums an der Getriebeseite und dem gegenüber der Rücklauf am Extruderausgang vorgesehen sein. Eine umgekehrte Anordnung ist ebenfalls möglich.

Es ist denkbar, mehrere voneinander unabhängige Kühlsysteme z.B. im Einlassbereich und am Ausgang des Extruders sowie in den einzelnen Gehäuseabschnitten vorzusehen.

Nach dem Vorstehenden ist mithin ein Einsatz zur Anordnung in einem Extrudergehäuse vorgesehen, das ein Trägermaterial aufweist, in dem wenigstens ein Versorgungskanal verläuft, das wenigstens einen Prozessraum umschließt, der mindestens zwei Extruderschnecken aufnimmt, wobei der Einsatz zwischen dem Extrudergehäuse und dem Prozessraum angeordnet ist und der Einsatz eine Wandstärke zumindest bereichsweise im Verhältnis zum Außendurchmesser einer Extruderschnecke 7%, vorzugsweise 6%, weiter vorzugsweise 5%, und ganz besonders vorzugsweise 4,5%, nicht übersteigt.

Besonders bevorzugt ist dabei der Einsatz bei seiner Anordnung in sogenannten Ringextrudern. Dies gilt auch für alle nacherwähnten bevorzugten Ausgestaltungen.

Nach dem Vorstehenden ist ferner bevorzugt ein Einsatz zur Anordnung in einem Extrudergehäuse vorgesehen , das ein Trägermaterial aufweist, in dem wenigstens ein Versorgungskanal verläuft, das wenigstens einen Prozessraum umschließt, der mindestens zwei Extruderschnecken aufnimmt, wobei der Einsatz zwischen dem Extrudergehäuse und dem Prozessraum angeordnet ist und der Einsatz eine Wandstärke zumindest bereichsweise im Verhältnis zum Außendurchmesser einer Extruderschnecke 7%, vorzugsweise 6%, weiter vorzugsweise 5%, und ganz besonders vorzugsweise 4,5%, nicht übersteigt, und wobei eine Kupferbeschichtung am Außenumfang des Einsatzes vorgesehen ist.

Nach dem Vorstehenden ist eine bevorzugte Ausführungsform des Einsatzes, dass dieser zur Anordnung in einem Extrudergehäuse vorgesehen ist, das ein Trägermaterial aufweist, in dem wenigstens ein Versorgungskanal verläuft, das wenigstens einen Prozessraum umschließt, der mindestens zwei Extruderschnecken aufnimmt, wobei der Einsatz zwischen dem Extrudergehäuse und dem Prozessraum angeordnet ist und der Einsatz eine Wandstärke zumindest bereichsweise im Verhältnis zum Außendurchmesser einer Extruderschnecke 7%, vorzugsweise 6%, weiter vorzugsweise 5%, und ganz besonders vorzugsweise 4,5%, nicht übersteigt, und wobei eine Kupferbeschichtung am Außenumfang des Einsatzes vorgesehen ist.

Eine bevorzugte Ausführungsform des Einsatzes zeichnet sich nach dem Vorstehenden folglich dadurch aus, dass der Einsatz zur Anordnung in einem Extrudergehäuse vorgesehen ist, das ein Trägermaterial aufweist, in dem wenigstens ein Versorgungskanal verläuft, das wenigstens einen Prozessraum umschließt, der mindestens zwei Extruderschnecken aufnimmt, wobei der Einsatz zwischen dem Extrudergehäuse und dem Prozessraum angeordnet ist und der Einsatz eine Wandstärke zumindest bereichsweise im Verhältnis zum Außendurchmesser einer Extruderschnecke 7%, vorzugsweise 6%, weiter vorzugsweise 5%, und ganz besonders vorzugsweise 4,5%, nicht übersteigt, und wobei der Einsatz in das Extrudergehäuse einschrumpfbar oder einschiebbar oder einpassbar ist.

Eine wiederum weitere bevorzugte Ausführungsform des Einsatzes ist, dass der Einsatz zur Anordnung in einem Extrudergehäuse vorgesehen ist, das ein Trägermaterial aufweist, in dem wenigstens ein Versorgungskanal verläuft, das wenigstens einen Prozessraum umschließt, der mindestens zwei Extruderschnecken aufnimmt, wobei der Einsatz zwischen dem Extrudergehäuse und dem Prozessraum angeordnet ist und der Einsatz eine Wandstärke zumindest bereichsweise im Verhältnis zum Außendurchmesser einer Extruderschnecke 7% nicht übersteigt, wobei der Werkstoff des Einsatzes eine Form-Gedächtnis-Legierung umfasst.

Nach dem Vorstehenden ist eine weitere bevorzugte Ausführungsform des Einsatzes, dass der zur Anordnung in einem Extrudergehäuse vorgesehen ist, das ein Trägermaterial aufweist, in dem wenigstens ein Versorgungskanal verläuft, das wenigstens einen Prozessraum umschließt, der mindestens zwei Extruderschnecken aufnimmt, wobei der Einsatz zwischen dem Extrudergehäuse und dem Prozessraum angeordnet ist und der Einsatz eine Wandstärke zumindest bereichsweise im Verhältnis zum Außendurchmesser einer Extruderschnecke 7%, vorzugsweise 6%, weiter vorzugsweise 5%, und ganz besonders vorzugsweise 4,5%, nicht übersteigt, wobei der Einsatz eine flächige Struktur aufweist.

Ferner stellt sich nach dem Vorstehenden eine weitere bevorzugte Ausführungsform des Einsatzes dergestalt dar, dass der Einsatz zur Anordnung in einem Extrudergehäuse vorgesehen ist, das ein Trägermaterial aufweist, in dem wenigstens ein Versorgungskanal verläuft, das wenigstens einen Prozessraum umschließt, der mindestens zwei Extruderschnecken aufnimmt, wobei der Einsatz zwischen dem Extrudergehäuse und dem Prozessraum angeordnet ist und der Einsatz eine Wandstärke zumindest bereichsweise im Verhältnis zum Außendurchmesser einer Extruderschnecke 7%, vorzugsweise 6%, weiter vorzugsweise 5%, und ganz besonders vorzugsweise 4,5%, nicht übersteigt, wobei der Einsatz eine gitterförmige Struktur aufweist.

Eine weitere bevorzugte Ausführungsform des Einsatzes zeichnet sich nach dem Vorstehenden folglich dadurch aus, dass der Einsatz zur Anordnung in einem Extrudergehäuse vorgesehen ist, das ein Trägermaterial aufweist, in dem wenigstens ein Versorgungskanal verläuft, das wenigstens einen Prozessraum umschließt, der mindestens zwei Extruderschnecken aufnimmt, wobei der Einsatz zwischen dem Extrudergehäuse und dem Prozessraum angeordnet ist und der Einsatz eine Wandstärke zumindest bereichsweise im Verhältnis zum Außendurchmesser einer Extruderschnecke 7%, vorzugsweise 6%, weiter vorzugsweise 5%, und ganz besonders vorzugsweise 4,5%, nicht übersteigt, wobei der Einsatz im Inneren eines Ringextruders zwischen dem Prozessraum und einem Kern des Ringextruders angeordnet ist.

Im Folgenden werden die Erfindung und ihre Ausgestaltungen im Zusammenhang mit den Figuren näher erläutert. Hierbei zeigen:
Fig. 1 zeigt einen Querschnitt durch ein Extrudergehäuse mit einem erfindungsgemäßen Einsatz, insbesondere einem Inliner und
Fig. 2 zeigt einen Schnitt durch das Extrudergehäuse eines Mehrwellenextruders mit einem Einsatz größerer Wandstärke.

Fig. 1 zeigt einen Mehrwellenextruder mit unterschiedlichen Gehäusebereichen 2; 3 eines Extrudergehäuses 4. Im Inneren des Extrudergehäuses 4 ist ein Prozessraum 5 dargestellt, der zum inneren Gehäusebereich 2 über einen Einsatz 6, insbesondere einen Inliner abgegrenzt ist.

In dem inneren Gehäusebereich 2 verlaufen Versorgungskanäle 7, insbesondere Kühlkanäle 8.

Fig. 1 zeigt einen Querschnitt durch das Extrudergehäuse 4 eines Ringextruders 9, bei dem (nicht dargestellte) Extruderschnecken ringförmig um einen ebenfalls nicht dargestellten Kern herum angeordnet sind.

Die Versorgungskanäle 7 verlaufen in dem Gehäusebereich 2 der Wandung 11 des Ringextruders 9, die sich radial außen an den Einsatz 6 anschließt.

Der Prozessraum 5, der die ringförmig aneinander anstoßenden Extruderschnecken (nicht gezeigt) des Ringextruders 9 aufnimmt, wird gegenüber den weiteren Gehäusebereichen 2 durch einen Einsatz 6, insbesondere einen Inliner abgegrenzt.

Der Einsatz 6 weist eine Wandstärke 12 auf, die insbesondere einen Wert von 5 mm, bevorzugt einen Wert von 4,2 mm und besonders bevorzugt einen Wert von 3,4 mm oder 3 mm bei einem Außendurchmesser der Schnecke von 71 mm nicht übersteigt.

Im Bereich jeweils zweier aneinander angrenzender Extruderschnecken (nicht gezeigt) weist der Einsatz 6 einen Zwickelbereich 13 auf.

In der Fig. 1 hat der Einsatz 6 in den Zwickelbereichen 13 sowie in den zwischen den Zwickeln 13 verlaufenden Bereichen 14 des Einsatzes 6 jeweils eine Wandstärke 12 von weniger als 5 mm bevorzugt, weniger als 4,2 mm und besonders bevorzugt 3,4 oder 3 mm bei Zugrundelegung des vorerwähnten Schneckenaußendurchmessers.

Der Einsatz 6 legt sich mit ihrer Außenkontur 15 weitgehend an die Innenkontur 16 des Gehäusebereichs 2 des Extrudergehäuses 4 an, die sich radial außen an den Einsatz 6 anschließt. Die Außenkontur 15 des Einsatzes 6 ist dabei der Innenkontur 16 des radial außen folgenden Gehäusebereichs 2 angepasst.

Die durch die Drehung der nicht dargestellten Extruderschnecken durch Friktion entstehenden Torsionskräfte werden durch den Einsatz 6 aus dem Prozessraum 5 in die Gehäusebereiche 2; 3 des Extrudergehäuses 4 übertragen.

Zur Optimierung der Kraftübertragung liegt der Einsatz 6, die den Prozessraum radial außen umgibt, flächig an der Innenkontur 16 desjenigen Gehäusebereichs 2; 3 an, die sich radial nach außen an den Einsatz 6 anschließt.

In dem sich an den Einsatz 6 radial nach außen anschließenden Gehäusebereich 2 sind Kühlkanäle 8 eingebracht, die das Extrudergehäuse 4 und/oder den Prozessraum 5 abkühlen bzw. temperieren.

Radial außenliegend in dem Gehäusebereich 3 sind Bohrungen für Befestigungsschrauben vorgesehen, die zur Verbindung von wenigstens zwei Gehäuseteilen vorgesehen sind.

In diesem Beispielsfall sind die Außenkontur des Einsatzes und die Innenkontur des Extrudergehäuses rosettenförmig derart ausgebildet, dass die dem jeweiligen Zwickel benachbarten Rückenbereiche des Einsatzes im Falle der Drehung um die eigene Achse nicht an dem gegenläufig ausgestalteten Teil der Innenkontur des Extrudergehäuses vorbeidrehen können. Dadurch wird einerseits eine besondere Verdrehsicherheit bewirkt und andererseits das Drehmoment am Umfang kontinuierlich vom Einsatz auf das Außengehäuse übertragen.

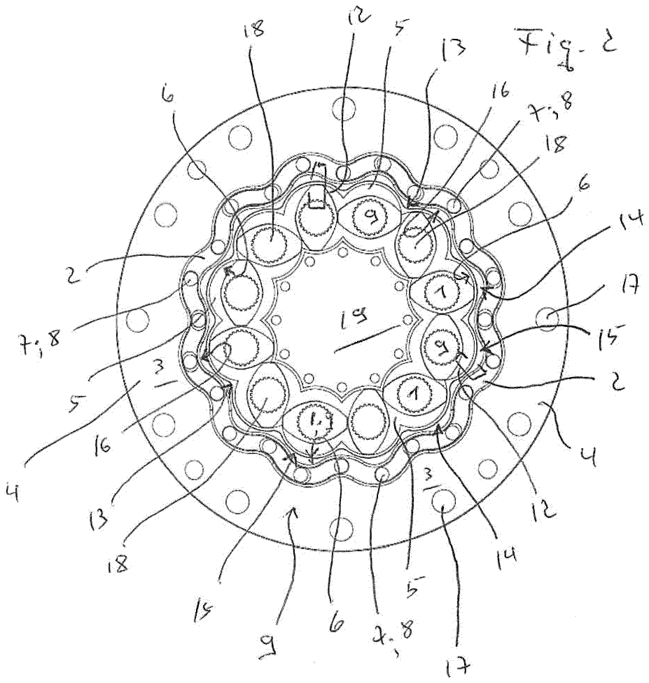

Fig. 2 zeigt eine Darstellung mit einem Ringextruder 9, der nicht dargestellte Extruderschnecken aufweist, die ringförmig um einen ebenfalls nicht dargestellten Kern herum angeordnet sind.

Die Extruderschnecken erstrecken sich in einem Prozessraum 5, der radial nach außen durch einen Einsatz 6, insbesondere einen Inliner begrenzt ist.

Der Einsatz 6 aus Fig. 2 unterscheidet sich darin von dem in Fig. 1 dargestellten Einsatz 6, dass die Wandstärke 12 des Einsatzes 6, insbesondere des Inliners im Bereich der Zwickel 13 und der zwischen den Zwickeln 13 sich erstreckenden Bereiche 14 unterschiedliche Werte annimmt.

Mit ihrer Außenkontur 15 legt sich der Einsatz 6, insbesondere der Inliner 6 zur Übertragung von Torsionskräften flächig an die Innenkontur 16 des jeweils radial nach außen angrenzenden Gehäusebereichs 2 an.

In dem Gehäusebereich 2 des Ringextruders 1; 9 verlaufen Versorgungskanäle 7, insbesondere Kühlkanäle 8. Die Kühlkanäle 8 dienen der zielgerichteten Kühlung der Prozessräume insbesondere im Bereich der Zwickel 13 und der sich zwischen den Zwickeln erstreckenden Bereiche 14 des Gehäusebereichs 2 des Extrudergehäuses 4.

Radial außerhalb des Gehäusebereichs 2 schließt sich ein Gehäusebereich 3 an, der Schraubenbohrungen aufweist, die der Verbindung von Extrudergehäuseteilen 17 dienen.

### Bezugsziffern

1. Mehrwellenextruder
2. Gehäusebereich innen
3. Gehäusebereich außen
4. Extrudergehäuse
5. Prozessraum
6. Einsatz (Inliner)
7. Versorgungskanal
8. Kühlkanal
9. Ringextruder
10. frei
11. Trägermaterial
12. Wandstärke
13. Zwickelbereich
14. Bereich zwischen den Zwickeln
15. Außenkontur des Einsatzes
16. Innenkontur Gehäusebereich
17. Extrudergehäuseteil

## Patentansprüche

1. Mehrwellenextruder mit einem Extrudergehäuse (4), das ein Trägermaterial (11) aufweist, in dem wenigstens ein Versorgungskanal (7) verläuft, das wenigstens einen Prozessraum (5) umschließt, der mindestens zwei Extruderschnecken aufnimmt, **dadurch gekennzeichnet, dass** zwischen dem Extrudergehäuse (4) und dem Prozessraum (5) ein Einsatz (6) angeordnet ist, dessen Wandstärke (12) zumindest bereichsweise im Verhältnis zum Aussendurchmesser einer Extruderschnecke 7% nicht übersteigt.

2. Mehrwellenextruder nach Anspruch 1, **dadurch gekennzeichnet, dass** die Wandstärke (12) des Einsatzes (6) zumindest bereichsweise 6% nicht übersteigt.

3. Mehrwellenextruder nach Anspruch 1, **dadurch gekennzeichnet, dass** die Wandstärke (12) des Einsatzes (6) zumindest bereichsweise 5% nicht übersteigt.

4. Mehrwellenextruder nach Anspruch 1, **dadurch gekennzeichnet, dass** die Wandstärke (12) des Einsatzes (6) zumindest bereichsweise 4,5% nicht übersteigt.

5. Mehrwellenextruder nach einem oder mehreren der vorhergehenden Ansprüche, **dadurch gekennzeichnet, dass** der Einsatz (6) mittels Drahterodieren hergestellt ist.

6. Mehrwellenextruder nach einem oder mehreren der vorhergehenden Ansprüche, **dadurch gekennzeichnet, dass** das Extrudergehäuse (4) mittels Drahterodieren hergestellt ist.

7. Mehrwellenextruder nach einem oder mehreren der vorhergehenden Ansprüche, **dadurch gekennzeichnet, dass** die Außenkontur (15) des Einsatzes (6) an die Innenkontur (16) des Extrudergehäuses (4) angepasst ist.

8. Mehrwellenextruder nach einem oder mehreren der vorhergehenden Ansprüche, **dadurch gekennzeichnet, dass** der Einsatz (6) im Verhältnis zur Innenkontur (16) des Extrudergehäuses (4) verdrehsicher angeordnet ist.

9. Mehrwellenextruder nach einem oder mehreren der vorhergehenden Ansprüche **dadurch gekennzeichnet, dass** der Einsatz (6) Torsionskräfte der Extruderschnecken auf das Extrudergehäuse (4) überträgt.

10. Mehrwellenextruder nach einem oder mehreren der vorhergehenden Ansprüche, **dadurch gekennzeichnet, dass** der Einsatz (6) zur Kraftübertragung und zur Abstützung an ihrem Außenumfang (15) am Innenumfang (16) des Extrudergehäuses (4) anliegt.

11. Mehrwellenextruder nach Anspruch 1, **dadurch gekennzeichnet, dass** der Versorgungskanal (7) ein Kühlkanal (8) ist, der zur Kühlung des Prozessraumes (5) ein Kühlmedium aufnimmt.

12. Mehrwellenextruder nach einem oder mehreren der vorhergehenden Ansprüche, **dadurch gekennzeichnet, dass** der Extruder ein Ringextruder (9) ist.

13. Mehrwellenextruder nach einem oder mehreren der vorhergehenden Ansprüche, **dadurch gekennzeichnet, dass** das Extruderegehäuse (4) aus wenigstens zwei miteinander verbundenen Extrudergehäuseteilen (17) zusammengesetzt ist.

14. Einsatz zur Anordnung in einem Extrudergehäuse (4) eines Mehrwellenextruders nach Anspruch 1, wobei das Extrudergehäuse ein Trägermaterial (11) aufweist, in dem wenigstens ein Versorgungskanal (7) verläuft, das wenigstens einen Prozessraum (5) umschließt, der mindestens zwei Extruderschnecken aufnimmt, wobei der Einsatz (6) zwischen dem Extrudergehäuse (4) und dem Prozessraum (5) angeordnet ist, **dadurch gekennzeichnet, dass** der Einsatz eine Wandstärke (12) zumindest bereichsweise im Verhältnis zum Außendurchmesser einer Extruderschnecke 7% nicht übersteigt.

## Claims

1. Multi-shaft extruder having an extruder barrel (4) which has a support material (11) in which at least one supply channel (7) extends and which encloses at least one process chamber (5) which receives at least two extruder screws, **characterized in that** between the extruder barrel (4) and the process chamber (5), an insert (6) is arranged the wall thickness (12) of which does not exceed 7 % in relation to the outer diameter of an extruder screw at least in some areas.

2. Multi-shaft extruder according to claim 1, **characterized in that** the wall thickness (12) of the insert (6) does not exceed 6 % at least in some areas.

3. Multi-shaft extruder according to claim 1, **characterized in that** the wall thickness (12) of the insert (6) does not exceed 5 % at least in some areas.

4. Multi-shaft extruder according to claim 1, **characterized in that** the wall thickness (12) of the insert (6) does not exceed 4.5 % at least in some areas.

5. Multi-shaft extruder according to one or more of the preceding claims, **characterized in that** the insert (6) is produced by wire eroding.

6. Multi-shaft extruder according to one or more of the preceding claims, **characterized in that** the extruder barrel (4) is produced by means of wire eroding.

7. Multi-shaft extruder according to one or more of the preceding claims, **characterized in that** the outer contour (15) of the insert (6) is adapted to the inner contour (16) of the extruder barrel (4).

8. Multi-shaft extruder according to one or more of the preceding claims, **characterized in that** the insert (6) is arranged in such a manner that it is secured against rotation in relation to the inner contour (16) of the extruder barrel (4).

9. Multi-shaft extruder according to one or more of the preceding claims, **characterized in that** the insert (6) transmits torsional forces of the extruder screws to the extruder barrel (4).

10. Multi-shaft extruder according to one or more of the preceding claims, **characterized in that**, for transmission of force and for support, the insert (6) rests on its outer circumference (15) against the inner circumference (16) of the extruder barrel (4).

11. Multi-shaft extruder according to claim 1, **characterized in that** the supply channel (7) is a cooling channel (8) which receives a cooling medium for cooling the process chamber (5).

12. Multi-shaft extruder according to one or more of the preceding claims, **characterized in that** the extruder is a ring extruder (9).

13. Multi-shaft extruder according to one or more of the preceding claims, **characterized in that** the extruder barrel (4) is composed of at least two extruder barrel parts (17) connected to each other.

14. Insert for arrangement in an extruder barrel (4) of a multi-shaft extruder according to claim 1, wherein the extruder barrel has a support material (11) in which at least one supply channel (7) extends and which encloses at least one process chamber (5) which receives at least two extruder screws, wherein the insert (6) is arranged between the extruder barrel (4) and the process chamber (5), **characterized in that** the insert does not exceed a wall thickness (12) of 7 % in relation to the outer diameter of an extruder screw at least in some areas.

## Revendications

1. Extrudeuse à plusieurs vis comportant un boîtier d'extrudeuse (4) qui présente un matériau support (11), dans lequel s'étend au moins un canal d'alimentation (7), qui entoure au moins une chambre de traitement (5) qui reçoit au moins deux vis d'extrudeuse, **caractérisée en ce qu'**entre le boîtier d'extrudeuse (4) et la chambre de traitement (5) est agencé un insert (6) dont, au moins par zones, l'épaisseur de paroi (12), ne dépasse pas 7 % par rapport au diamètre extérieur d'une vis d'extrudeuse.

2. Extrudeuse à plusieurs vis selon la revendication 1, **caractérisée en ce que**, au moins par zones, l'épaisseur de paroi (12) de l'insert (6) ne dépasse pas 6 %.

3. Extrudeuse à plusieurs vis selon la revendication 1, **caractérisée en ce que**, au moins par zones, l'épaisseur de paroi (12) de l'insert (6) ne dépasse pas 5 %.

4. Extrudeuse à plusieurs vis selon la revendication 1, **caractérisée en ce que**, au moins par zones, l'épaisseur de paroi (12) de l'insert (6) ne dépasse pas 4,5 %.

5. Extrudeuse à plusieurs vis selon l'une ou plusieurs des revendications précédentes, **caractérisée en ce que** l'insert (6) est réalisé par érosion au fil.

6. Extrudeuse à plusieurs vis selon l'une ou plusieurs des revendications précédentes, **caractérisée en ce que** le boîtier d'extrudeuse (4) est réalisé par érosion au fil.

7. Extrudeuse à plusieurs vis selon l'une ou plusieurs des revendications précédentes, **caractérisée en ce que** le contour extérieur (15) de l'insert (6) est adapté au contour intérieur (16) du boîtier d'extrudeuse (4).

8. Extrudeuse à plusieurs vis selon l'une ou plusieurs des revendications précédentes, **caractérisée en ce que** l'insert (6) est agencé de manière bloquée en rotation par rapport au contour intérieur (16) du boîtier d'extrudeuse (4).

9. Extrudeuse à plusieurs vis selon l'une ou plusieurs des revendications précédentes, **caractérisée en ce que** l'insert (6) transmet des forces de torsion des vis d'extrudeuse au boîtier d'extrudeuse (4).

10. Extrudeuse à plusieurs vis selon l'une ou plusieurs des revendications précédentes, **caractérisée en ce que** pour la transmission de force et pour le soutien sur la périphérie extérieure (15), l'insert (6) est en appui sur la périphérie intérieure (16) du boîtier d'extrudeuse (4).

11. Extrudeuse à plusieurs vis selon la revendication 1, **caractérisée en ce que** le canal d'alimentation (7) est un canal de refroidissement (8) qui reçoit un agent de refroidissement pour refroidir la chambre de traitement (5).

12. Extrudeuse à plusieurs vis selon l'une ou plusieurs des revendications précédentes, **caractérisée en ce que** l'extrudeuse est une extrudeuse à anneaux (9).

13. Extrudeuse à plusieurs vis selon l'une ou plusieurs des revendications précédentes, **caractérisée en ce que** le boîtier d'extrudeuse (4) est constitué par au moins deux parties (17) de boîtier d'extrudeuse reliées l'une à l'autre.

14. Insert destiné à être agencé dans un boîtier d'extrudeuse (4) d'une extrudeuse à plusieurs vis selon la revendication 1, le boîtier d'extrudeuse présentant un matériau support (11), dans lequel s'étend au moins un canal d'alimentation (7), qui entoure au moins une chambre de traitement (5) qui reçoit au moins deux vis d'extrudeuse, l'insert (6) étant agencé entre le boîtier d'extrudeuse (4) et la chambre de traitement (5), **caractérisé en ce que** l'insert présente, au moins par zones, une épaisseur de paroi (12) qui ne dépasse par 7% par rapport au diamètre extérieur d'une vis d'extrudeuse.
